# EUROPEAN PATENT SPECIFICATION

(11) **EP 1 671 752 B1**
(45) Date of publication and mention of the grant of the patent: **19.08.2009**
(21) Application number: 05110983.3
(22) Date of filing: 18.11.2005
(51) Int. Cl.: B25F 5/00, B23Q 17/22, B23B 51/00

(54) **Drill device for controlling the angle of the drill bit during drilling**
Bohrvorrichtung zur Kontrolle des Bohrerwinkels während des Bohrens
Dispositif de contrôle de l'angle du forêt pendant le perçage

(30) Priority: 14.12.2004 IT PI20040094
(43) Date of publication of application: 21.06.2006
(73) Proprietor: LAI, Mariano, 16137 Genova (IT)
(72) Inventor: LAI, Mariano, 16137 Genova (IT)
(74) Representative: Porsia, Attilio

(56) References cited:
- DE-A1- 19 749 732
- FR-A- 2 806 650
- GB-A- 2 333 478
- US-A- 3 086 408
- US-A- 3 776 647
- US-A- 5 465 492

## Description

The present invention relates to electric drills, and more particularly to a device applicable to a drill for controlling the position, angle and depth of penetration of the bit during the drilling operation.

The difficulties of using electric drills for drilling very hard and/or smooth surfaces, such as metal plate, ceramic tiles and the like, are well known: when drilling begins, the drill bit tends to wander away from the exact predefined point. Furthermore, with such drills it is not always easy to keep the bit at the desired angle with respect to the surface to be drilled, either when this angle is supposed to be perpendicular to the surface, or when the angle should be other than 90°, which is even more difficult.
From US-A-3 776 647 a safety guard and dust and debris collector attachment for a drill is known, comprising a first tubular component provided at one end with means for fixing to the head of a drill; a second tubular component able to slide telescopically inside the other end of said first tubular component; and a tubular tool attached at one end to the free end of said second tubular component, a cylindrical compression spring being installed between said tubular components.
However, the main disadvantage of the above described prior art device resides in the fact that it is not possible to keep the drill bit at a predetermined angle with respect to the surface to be drilled. Moreover, by the above described prior art device it is not possible to prevent the drill device from sliding along the surface to be drilled.
The main object of the present invention is therefore an inexpensive device that can be fitted easily to any drill and that is capable of solving all the problems associated with keeping the drill bit firmly at the exact desired angle and position.

This is achieved with a device as claimed in Claim 1.

Other objects and advantages of the present invention will become clearer in the course of the following description. The description refers to the appended drawings, in which:
Figure 1 is a side elevation of an electric drill equipped with a device useful for understanding the present invention, the end of which is fitted with an accessory for making holes perpendicular to the surface to be drilled, and having a holder for collecting drilling waste;
Figure 2 is a longitudinal cross section on an enlarged scale through the device shown in Figure 1; and
Figure 3 shows a detail of an accessory for fitting to the device seen in Figures 1 and/or 2 in place of the accessory for making holes perpendicular to the surface to be drilled, or making angled holes.

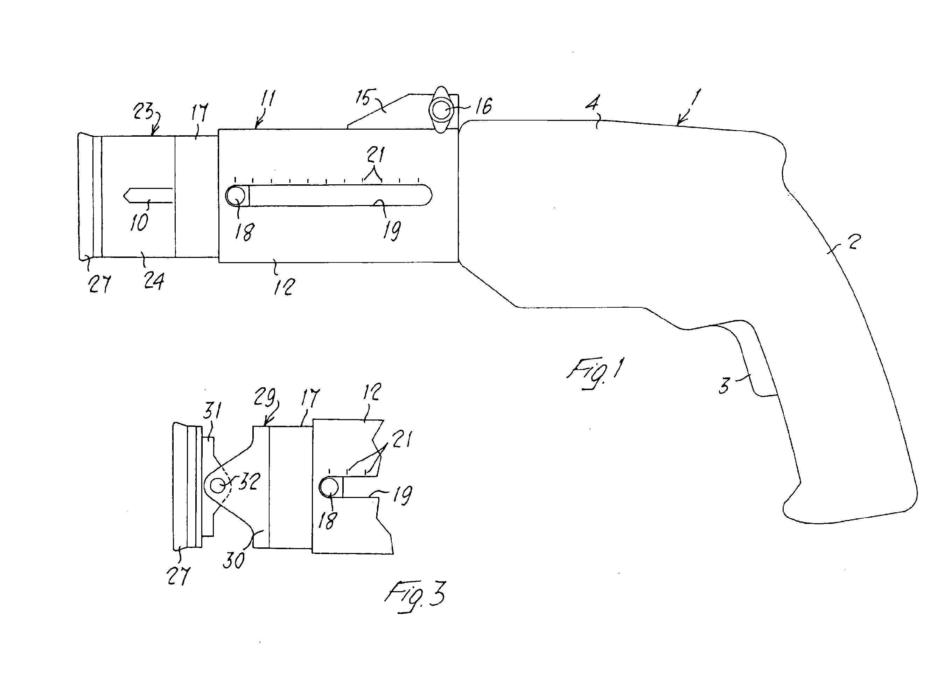

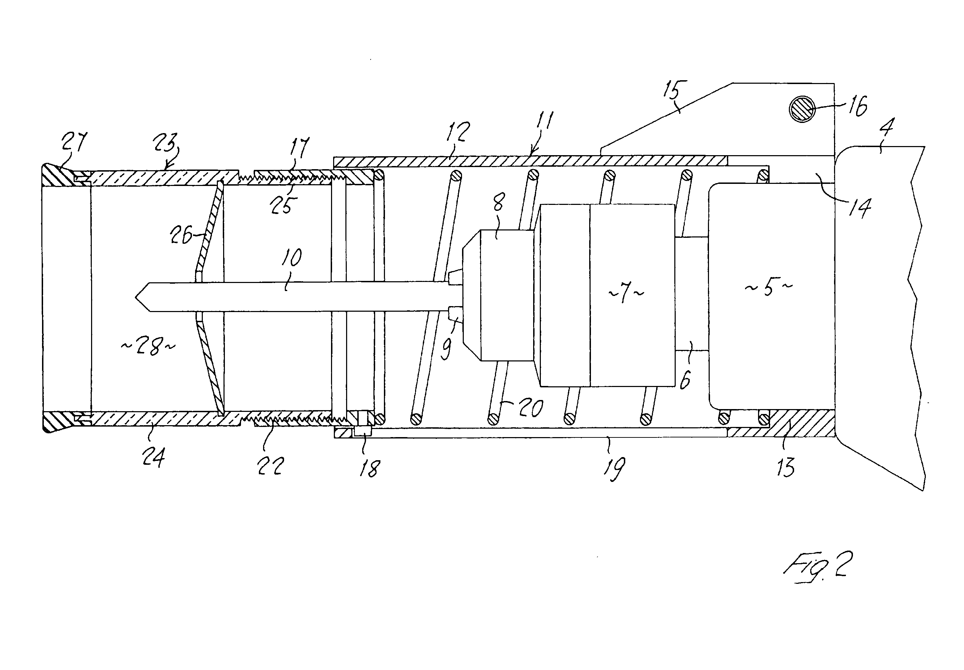

Referring to the drawings, and with particular reference initially to Figures 1 and 2, reference number 1 indicates an electric drill comprising, in the ordinary way, a pistol grip 2, a trigger switch 3, and a body 4 ending in the cylindrical head 5 from which extends the driven spindle 6 carrying the chuck holder 7 that holds the chuck 8, from which the jaws 9 emerge to grip the drill bit 10.

Number 11 is the general reference for the device useful for understanding the present invention. This device comprises a first tubular component 12 provided at one end with an internal annular flange 13 whose inside diameter is approximately equal to the outside diameter of the drill head 5. This flange 13 provided with a split 14 from the two sides of which rise two lugs 15 that can be tightened with a screw and nut 16 in order to squeeze the flange 13 elastically. Reference 17 denotes a second tubular component that slides telescopically inside the other end of the first tubular component 12. Reference 18 denotes pins projecting radially from the second tubular component 17: these slide along elongate guiding slots 19 made in the cylindrical shell of the first tubular component 12. Advantageously, these slots have external metric graduations 21 for reasons which will be described later. Reference 20 denotes a cylindrical compression spring, installed with one end against the internal step of the flange 13 and with the other end against the rear end of the cylindrical wall of the second cylindrical tubular component 17. The second cylindrical component 17 has an internal thread 22 so that special work tools can be attached. This thread 22 extends for a considerable distance along the inside shell of the second cylindrical component 17, for purposes which will be described more fully later.

One of these tools, which has the general reference 23, is the tool for keeping the drill bit 10 perpendicular to the surface to be drilled, and for preventing the bit 10 wandering away from the exact point where the user wishes to make the hole.

This tool 23 comprises a cylindrical tubular body 24, preferably of transparent plastic material, the outside diameter of which is equal to the outside diameter of the second tubular component 17, with at one end an externally threaded cylindrical collar 25 to allow it to be screwed onto the threaded part 22 of the second tubular component 17. This external thread extends, like the internal thread 22 of the second tubular component 17, for a distance of some centimetres, for reasons which will be described later. Near the collar 25 end, the cylindrical body 24 contains a diaphragm 26 with a central hole for the drill bit 10 to pass through. Mounted on the free end of the cylindrical body 24 is an annular component 27, preferably of rubber or a material with a high coefficient of friction similar to rubber.

Operation of the device described will now be obvious. The application of the ring 27 to the surface to be drilled ensures that the drill bit 10 will act exactly perpendicularly to this surface. Moreover, since the ring is made of a material with a high coefficient of friction, such as rubber, it will prevent the device, and hence the bit, from sliding about, even if the surface to be drilled is a hard, smooth surface such as a ceramic tile or a metal plate. Waste formed during drilling is collected in the space 28 between the ring 27 and the pierced diaphragm 26 and so does not escape into the environment. As the drill bit 10, pushed by the operator, advances into the material, the second cylindrical component 17 and the cylindrical body 24 sink telescopically into the cylindrical body 12, in opposition to the action of the spring 20. The degree of penetration of the bit is indicated by the position of the head of the pin 18 in the slot 19, its position being shown by the graduations 21, so that the operator can see at any time how far the bit 10 has advanced into the material. Once the drilling operation is completed, extraction of the bit 10 from the hole is helped and accompanied by the spring 20, which returns the parts to the rest position shown in Figure 2. Waste collected in the space 28 can then easily be disposed of without the risk of dirtying the surrounding environment.

Depending on the lengths of the bits 10 mounted in the drill, it may be necessary to adjust the length of the component 23. This can easily be done by screwing the parts 25 and 17 in or out to modify the length of this component 23.

The tool 29 according to the invention illustrated in Figure 3 is screwed onto the second cylindrical component 17 in place of the tool 23. The tool 29 comprises a base 30 to which is attached a threaded collar (not shown) similar to the collar 25 for screwing onto the second cylindrical component 17, and a head part consisting of a supporting component 31 on which the ring 27 is mounted. The base 30 and the supporting component 31 are hinged to each other by two diametrically opposite pins 32. These pins may advantageously be tightened so that the two parts 31, 32 can be locked in the desired angular position. These parts may also be provided with a connecting boot or bag (not shown) to retain the drilling waste. The operation of this device will be obvious.

The present invention is of course not limited to the embodiment illustrated and described but rather encompasses all those variants and modifications which fall within the scope of the claims.

## Claims

1. Drill device for controlling the angle of the drill bit with respect to the surface to be drilled, comprising a first tubular component (12) provided at one end with means for fixing it to the head of a drill; a second tubular component (17) able to slide telescopically inside the other end of the said first tubular component (12); and a tubular tool attached at one end to the free end of the second tubular component (17), a cylindrical compression spring (20) being installed between the said first and second tubular components (12) and (17) **characterised by** the fact that the said tubular tool is provided at its other end, which is intended to be placed against the surface to be drilled, with a ring of nonslip material (27), and that in order to keep the drill bit at a predetermined angle with respect to the surface to be drilled it is provided with a device (29) comprising a base (30) to which is attached a threaded collar for screwing onto the cylindrical component (17), and a head part consisting of a supporting component (31) on which the said ring (27) of nonslip material is mounted, the base (30) and the supporting component (31) being hinged to each other by two diametrically opposite pins (32) capable of locking the two parts (31, 32) in the desired angular position.

2. Device according to Claim 1, **characterized in that** the said first tubular component (12) is provided at one end with an annular flange (13) whose inside diameter is approximately equal to the outside diameter of the drill head (5), the said flange (13) being provided with a split (14), from the two sides of which rise two lugs (15) that can be tightened in order to squeeze the flange (13) elastically around the drill head (5).

3. Device according to Claim 1, **characterized in that** said second tubular component (17) sliding telescopically inside the first tubular component (12) carries radially projecting pins (18) capable of sliding along elongate guiding slots (19) made in the cylindrical shell of the first tubular component (12).

4. Device according to Claim 3, **characterized in that** there are graduations (21) on the outside of the slots (19) to show how far the bit (10) has penetrated into the material being drilled.

5. Device according to Claim 1, **characterized in that** the said cylindrical compression spring (20) is installed with one end against an internal step of the flange (13) and with the other end against the rear end of the wall of the second cylindrical tubular component (17).

6. Device according to any one of the preceding claims, **characterized in that** the second cylindrical component (17) has an internal thread (22) for fitting special work tools (29).

7. Device according to Claim 1, in which said ring of nonslip material (27) is of rubber or of a material with a high coefficient of friction similar to rubber and is mounted on the free end of the supporting component (31).

## Patentansprüche

1. Bohrvorrichtung zum Steuern des Winkels des Bohrers in Bezug auf die zu bohrende Oberfläche, mit einer ersten rohrförmigen Komponente (12), die an einem Ende mit Mitteln versehen ist, um sie am Kopf eines Bohrers zu befestigen; einer zweiten rohrförmigen Komponente (17), die teleskopartig im anderen Ende der ersten rohrförmigen Komponente (12) gleiten kann; und einem rohrförmigen Werkzeug, das mit einem Ende am freien Ende der zweiten rohrförmigen Komponente (17) befestigt ist, wobei zwischen der ersten und der zweiten rohrförmigen Komponente (12) und (17) eine zylindrische Druckfeder (20) installiert ist, **dadurch gekennzeichnet, dass** das rohrförmige Werkzeug an seinem anderen Ende, das an der zu bohrenden Oberfläche angeordnet werden soll, mit einem Ring (27) aus einem nichtrutschenden Material versehen ist und dass sie, um den Bohrer unter einem vorgegebenen Winkel in Bezug auf die zu bohrende Oberfläche zu halten, mit einer Vorrichtung (29) versehen ist, die eine Basis (30), an der ein Gewindekranz befestigt ist, um auf die zylindrische Komponente (17) geschraubt zu werden, und einen Kopfabschnitt, der aus einer Unterstützungskomponente (13) besteht, an der der Ring (27) aus einem nichtrutschenden Material montiert ist, umfasst, wobei die Basis (30) und die Unterstützungskomponente (31) aneinander durch zwei diametral gegenüberliegende Stifte (32) angelenkt sind, die die beiden Abschnitte (31, 32) in der gewünschten Winkelposition verriegeln können.

2. Vorrichtung nach Anspruch 1, **dadurch gekennzeichnet, dass** die erste rohrförmige Komponente (12) an einem Ende mit einem ringförmigen Flansch (13) versehen ist, dessen Innendurchmesser ungefähr gleich dem Außendurchmesser des Bohrkopfes (5) ist, wobei der Flansch (13) mit einem Spalt (14) versehen ist, von dessen zwei Seiten zwei Ansätze (15) aufragen, die zusammengedrückt werden können, um den Flansch (13) elastisch um den Bohrkopf (5) zu quetschen.

3. Vorrichtung nach Anspruch 1, **dadurch gekennzeichnet, dass** die zweite rohrförmige Komponente (17), die in der ersten rohrförmigen Komponente (12) teleskopartig gleitet, radial vorstehende Stifte (18) trägt, die längs lang gestreckter Führungsschlitze (19) gleiten können, die in dem zylindrischen Mantel der ersten rohrförmigen Komponente (12) ausgebildet sind.

4. Vorrichtung nach Anspruch 3, **dadurch gekennzeichnet, dass** an der Außenseite der Schlitze (19) Skalenteilungen vorhanden sind, um anzuzeigen, wie weit der Bohrer (10) in das gebohrte Material eingedrungen ist.

5. Vorrichtung nach Anspruch 1, **dadurch gekennzeichnet, dass** die zylindrische Druckfeder (20) an einem Ende an einer Innenstufe des Flansches (13) installiert ist und am anderen Ende am hinteren Ende der Wand der zweiten zylindrischen rohrförmigen Komponente (17) anliegt.

6. Vorrichtung nach einem der vorhergehenden Ansprüche, **dadurch gekennzeichnet, dass** die zweite zylindrische Komponente (17) ein Innengewinde (22) aufweist, um spezielle Arbeitswerkzeuge (29) einzusetzen.

7. Vorrichtung nach Anspruch 1, in der der Ring aus einem nichtrutschenden Material (27) aus Gummi oder aus einem Material mit hohem Reibkoeffizienten ähnlich wie Gummi ist und am freien Ende der unterstützenden Komponente (31) angebracht ist.

## Revendications

1. Dispositif de perçage pour contrôler l'angle du foret de perçage par rapport à la surface à forer, comportant un premier composant tubulaire (12) équipé à une extrémité d'un dispositif pour le fixer à la tête du dispositif de perçage ; un deuxième (17) composant tubulaire pouvant glisser de façon télescopique à l'intérieur de l'autre extrémité dudit premier composant tubulaire (12) ; et un outil tubulaire fixé par une extrémité à l'extrémité libre du deuxième composant tubulaire (17), un ressort de compression cylindrique (20) étant installé entre lesdits premier et deuxième composants (12) et (17) **caractérisé en ce que** ledit outil tubulaire est équipé à son autre extrémité, prévue pour être placée contre la surface à forer, d'un anneau en matériau antidérapant (27), et qui afin de maintenir le foret à une angle prédéterminé par rapport à la surface à forer est équipé d'un dispositif (29) comportant une base (30) à laquelle est fixé un collier fileté devant être vissé sur le composant cylindrique (17), et une partie de tête se composant d'un support (31) sur lequel ledit anneau (27) en matériau antidérapant est monté, la base (30) et le support (31) étant articulés entre eux par deux axes diamétralement opposés (32) capables de verrouiller les deux parties (31, 32) dans la position angulaire souhaitée.

2. Dispositif selon la revendication 1, **caractérisé en ce que** ledit premier composant tubulaire (12) est équipé à une extrémité d'une bride annulaire (13) dont le diamètre intérieur est approximativement égal au diamètre extérieur de la tête de perçage (5), ladite bride (13) étant équipée d'une fente (14), des deux côtés de laquelle montent deux cosses (15) qui peuvent être serrées afin de plaquer la bride (13) de façon élastique autour de la tête de perçage (5).

3. Dispositif selon la revendication 1, **caractérisé en ce que** le composant tubulaire secondaire (17) glissant de façon télescopique à l'intérieur du premier composant tubulaire (12) porte des axes projetant de façon radiale (18) et pouvant glisser le long de fentes de guidage (19) pratiquées dans l'enveloppe cylindrique du premier composant tubulaire (12).

4. Dispositif selon la revendication 3, **caractérisé en ce qu'**il y a des graduations (21) sur l'extérieur des fentes (19) pour montrer à quelle profondeur le foret (10) a pénétré dans le matériau foré.

5. Dispositif selon la revendication 1, **caractérisé en ce que** ledit ressort de compression cylindrique (20) est installé avec une extrémité contre un retrait de la bride (13) et l'autre contre l'extrémité arrière de la paroi du deuxième composant tubulaire cylindrique (17).

6. Dispositif selon une des revendications précédentes, **caractérisé en ce que** le deuxième composant cylindrique (17) a un filet interne (22) pour le montage d'outils spéciaux (29).

7. Dispositif selon la revendication 1, dans lequel ledit anneau en matériau antidérapant (27) est en caoutchouc ou en matériau avec un coefficient de frottement élevé semblable au caoutchouc et est monté sur l'extrémité libre du support (31).
